# EUROPEAN PATENT APPLICATION

(11) **EP 3 451 544 A1**
(43) Date of publication of application: **06.03.2019**
(21) Application number: 17789813.7
(22) Date of filing: 11.04.2017
(51) Int. Cl.: H04B 5/00, H02J 50/90, H02J 50/80, H02J 7/02, H01Q 1/38, H01Q 1/24, H01Q 1/22, H02J 50/12

(54) **MULTI-MODE ANTENNA INTEGRATED WITH CIRCUIT BOARD, AND DEVICE USING SAME**

(30) Priority: 29.04.2016 KR 20160053067; 09.06.2016 KR 20160071576
(71) Applicant: LG Innotek Co., Ltd., Seoul 04637 (KR)
(72) Inventor: PARK, Yu Ri, Seoul 04637 (KR); LEEM, Sung Hyun, Seoul 04637 (KR)
(74) Representative: DREISS Patentanwälte PartG mbB
(86) International application number: PCT/KR2017/003926
(87) International publication number: WO 2017/188628

(57) **Abstract**

The present invention relates to a multi-mode antenna integrated with a circuit board, and a device using the same, and according to one embodiment of the present invention, the multi-mode antenna integrated with a circuit board comprises: a circuit board; a first pattern coil printed on a first surface of the circuit board; a second pattern coil printed on a second surface of the circuit board; and a terminal circuit mounted on one side of the circuit board such that both ends of the first pattern coil and both ends of the second pattern coil are connected, wherein the both ends of the first pattern coil can be respectively connected to the both ends of the second pattern coil through the terminal circuit. Therefore, the present invention has an advantage of enabling a multi-mode antenna integrated with a more integrated circuit board to be provided.

## Description

### [Technical Field]

Embodiments relate to a wireless charging technique, and more particularly, to a circuit board integrated multi-mode antenna capable of providing a plurality of antenna functions using one pattern coil printed on a circuit board, and a device using the same.

### [Background Art]

Recently, with rapid development of information and communication technology, a ubiquitous society based on information and communication technology is being established.

In order for information communication devices to be connected anywhere and anytime, sensors with a built-in computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging the battery has required time and effort. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field. In the 1800s, an electric motor or a transformer based on the electromagnetic induction principle began to be used. Thereafter, a method of transmitting electric energy by radiating an electromagnetic wave such as a radio wave or a laser was tried. Electric toothbrushes and some electric shavers are charged through electromagnetic induction.

Wireless energy transmission schemes known up to now may be broadly classified into electromagnetic induction, electromagnetic resonance, and RF transmission using a short-wavelength radio frequency.

In the electromagnetic induction scheme, when two coils are arranged adjacent to each other and current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is less than or equal to 1 cm. As a result, the device should be generally arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic wave. However, this scheme may be used only at a limited distance and in a limited space, and has somewhat low energy transfer efficiency.

The short-wavelength wireless power transmission scheme (simply, RF transmission scheme) takes advantage of the fact that energy can be transmitted and received directly in the form of radio waves. This technology is an RF power transmission scheme using a rectenna. A rectenna, which is a compound of antenna and rectifier, refers to a device that converts RF power directly into direct current (DC) power. That is, the RF method is a technology for converting AC radio waves into DC waves. Recently, with improvement in efficiency, commercialization of RF technology has been actively researched.

The wireless power transmission technology is applicable to various industries including IT, railroads, automobiles, and home appliance industries as well as the mobile industry.

As the wireless power transmission technology is applied to small devices such as mobile devices, it is important to miniaturize the antenna module by integrating the conventional short-range communication antenna and a wireless charging antenna.

In this regard, Korean Patent Application No. 10-2013-7033209 (Method and Apparatus for Receiving Wireless Power) discloses a receiver for a wireless charging system, including a coil for receiving electric energy and a separate near field communication (NFC) coil provided outside the coil.

The conventional wireless power receiver is equipped with an NFC antenna and an NFC antenna terminal separately from a power receiving antenna for wireless reception, that is, a receive coil, as disclosed in the aforementioned patent document. In this case, interference occurs between the power receiving antenna and the NFC antenna. Therefore, a separate compensation circuit needs to be additionally provided to compensate for interference occurring between the two antennas.

In addition, there are a variety of signals for controlling wireless power transmission between the wireless power transmitters and receivers, in comparison with the amount and types of control signals and control information defined by the standard group related to wireless power transmission. For example, a signal that includes information about the position of the transmit and receive coils or alignment state of the coils transmitted from a wireless power transmitter to a wireless power receiver is not defined in any standard.

Accordingly, there is a need for a specific scheme for delivering, by a wireless power transmitter and receiver, more diverse information while reducing interference between short-range wireless communication (e.g., NFC communication) and wireless power transmission/reception for controlling wireless power transmission.

### [Disclosure]

### [Technical Problem]

Therefore, the present disclosure has been made in view of the above problems, and embodiments provide a multi-mode antenna integrated with a circuit board, and a device using the same.

Embodiments provide a multi-mode antenna integrated with a circuit board that allows a part of a pattern coil printed on the circuit board for wireless charging to be used as an antenna (for example, an NFC antenna) for uses other than wireless charging.

Embodiments provide a small integrated antenna module that provides various functions.

Embodiments provide a circuit board integrated antenna module having a wireless charging antenna, an NFC antenna, and a Bluetooth communication antenna.

Embodiments provide a method of controlling wireless power transmission using short-range wireless communication through time-division of power transmission and short-range wireless communication while using a power transmission/reception antenna for power transmission and reception and an antenna for short-range wireless communication, and a device for the same.

The technical objects that can be achieved through the embodiments are not limited to what has been particularly described hereinabove and other technical objects not described herein will be more clearly understood by persons skilled in the art from the following detailed description.

### [Technical Solution]

Embodiments may provide a multi-mode antenna integrated with a circuit board, and a device using the same.

In one embodiment, a circuit board integrated multi-mode antenna including a circuit board, a first pattern coil printed on a first surface of the circuit board, a second pattern coil printed on a second surface of the circuit board, and a terminal circuit mounted on one side of the circuit board and connected with both ends of the first pattern coil and both ends of the second pattern coil, wherein the both ends of the first pattern coil may be connected to the both ends of the second pattern coil through the terminal circuit. Here, the terminal circuit may include first to eighth terminals.

In addition, the both ends of the first pattern coil may be connected to the second terminal and the fifth terminal, and the both ends of the second pattern coil may be connected to the first terminal and the sixth terminal.

Here, the second terminal and the first terminal may be connected to each other, and the fifth terminal and the sixth terminal may be connected to each other.

Each of the first pattern coil and the second pattern coil may be printed on the circuit board by arranging one feed line to form a plurality of turns in a spiral shape.

Here, an outermost turn of at least one of the first pattern coil and the second pattern coil may be used as a Near Field Communication (NFC) antenna.

In an example, a line branching from one side of an outermost turn of the second pattern coil may be connected to the seventh terminal.

In another example, a line branching from one side of an outermost turn of the first pattern coil may be connected to the third terminal.

In another example, a line branching from one side of the outermost turn of the second pattern coil may be connected to the seventh terminal, and a line branching from one side of the outermost turn of the first pattern coil may be connected to the third terminal, wherein the seventh terminal and the third terminal may be connected to each other.

In an example, the circuit board integrated multi-mode antenna may further include a Bluetooth antenna printed in a straight-line shape on one side of the first surface and connected to the fourth terminal.

In another example, the circuit board integrated multi-mode antenna may further include a Bluetooth antenna printed in a straight-line shape on one side of the second surface and connected to the eighth terminal.

In another example, the circuit board integrated multi-mode antenna may further include a first dipole antenna and a second dipole antenna printed in a straight-line shape on one side of each of the first surface and the second surface, respectively, wherein the first dipole antenna may be connected to the fourth terminal, and the second dipole antenna may be connected to the eighth terminal, wherein the fourth terminal and the eighth terminal may be connected to each other to use the dipole antennas as a Bluetooth antenna.

Each of the first pattern coil and the second pattern coil may be printed on the circuit board to form a plurality of turns in a spiral shape, wherein the number of the turns may be greater than or equal to three.

The first pattern coil and the second pattern coil may be configured to transmit a power signal of an electromagnetic resonance scheme.

In another embodiment, a wireless power transmission device includes a circuit board integrated multi-mode antenna including first and second pattern coils respectively printed on a first surface and a second surface of a circuit board, and a terminal circuit connected with ends of the first and second pattern coils, and a control circuit board configured to transmit an alternating current (AC) power signal through the terminal and transmit and receive a short-range wireless communication signal through the terminal, wherein a part of the first and second pattern coils may be used as an antenna for short-range wireless communication.

Here, the wireless power transmission device may further include a shielding module configured to block an electromagnetic signal induced in the circuit board integrated multi-mode antenna from being transmitted to the control circuit board.

In addition, the terminal circuit may include first to eighth terminals.

In addition, both ends of the first pattern coil may be connected to the second terminal and the fifth terminal, and both ends of the second pattern coil may be connected to the first terminal and the sixth terminal.

The second terminal and the first terminal may be connected to each other, and the fifth terminal and the sixth terminal may be connected to each other.

Each of the first pattern coil and the second pattern coil forms a plurality of turns by printing one feed line in a spiral shape, and an outermost turn of at least one of the first pattern coil and the second pattern coil may be used as a Near Field Communication (NFC) antenna.

In an example, a line branching from one side of an outermost turn of the second pattern coil may be connected to the seventh terminal.

In another example, a line branching from one side of an outermost turn of the first pattern coil may be connected to the third terminal.

In another example, a line branching from one side of the outermost turn of the second pattern coil may be connected to the seventh terminal, and a line branching from one side of the outermost turn of the first pattern coil may be connected to the third terminal, wherein the seventh terminal and the third terminal may be connected to each other.

In an example, the wireless power transmission device may further include a Bluetooth antenna printed in a straight-line shape on one side of the first surface and connected to the fourth terminal.

In another example, the wireless power transmission device may further include a Bluetooth antenna printed in a straight-line shape on one side of the second surface and connected to the eighth terminal.

In another example, the wireless power transmission device may further include a first dipole antenna and a second dipole antenna printed in a straight-line shape on each of the first surface and the second surface, respectively, wherein the first dipole antenna may be connected to the fourth terminal, and the second dipole antenna may be connected to the eighth terminal, wherein the fourth terminal and the eighth terminal may be connected to each other to use the dipole antennas as a Bluetooth antenna.

In addition, elements mounted on the control circuit board and sensitive to an electromagnetic signal may be disposed on the control circuit board such that positions thereof do not overlap a printing position of the Bluetooth antenna.

In addition, when the first pattern coil and the second pattern coil are used as a whole, a control operation may be performed to transmit a power signal of an electromagnetic resonance scheme through the first pattern coil and the second pattern coil.

In addition, the first pattern coil and the second pattern coil may be printed on the circuit board so as to overlap each other on the circuit board as much as possible.

In another embodiment, a circuit board integrated multi-mode antenna include a circuit board, a first pattern coil disposed on a first surface of the circuit board, and a terminal circuit mounted on one side of the circuit board and including first to third terminals, wherein both ends of the first pattern coil may be connected to the first terminal and the second terminal, and a line branching from one side of the first pattern coil may be connected to the third terminal.

In addition, the first terminal and the second terminal may be used as a wireless power transmission antenna.

In addition, the first terminal and the third terminal may be used as a Near Field Communication (NFC) antenna.

The terminal circuit may further include a fourth terminal, and a Bluetooth antenna disposed on one side of the first surface and connected to the fourth terminal.

In addition, the first pattern coil may be disposed in a spiral shape to form a plurality of turns.

In addition, the first pattern coil may be used as a wireless power transmission antenna.

Further, an outermost turn of the first pattern coil may be used as a Near Field Communication (NFC) antenna.

Signals may be transmitted by performing time division on a transmission time for the first pattern coil and the second pattern coil, wherein a wireless power signal for wireless charging may be transmitted through the first pattern coil and a short-range wireless communication signal may be transmitted through the second pattern coil.

The first pattern coil may transmit the wireless power signal for a first time in every first period, and the second pattern coil may transmit the short-range wireless communication signal for a second time after the first time in every second period.

The first pattern coil may transmit a wireless power signal at a first power for a first time and transmit a second power lower than the first power for a third time, wherein the third time may be between the first time and the second time, wherein the second power may correspond to an amount of power consumed for the second pattern coil to perform short-range wireless communication for the second time.

The first pattern coil may transmits a first power for a first time and transmit a third power higher than the first power for a third time, and the other one may perform NFC communication for the first time, wherein the third time may be between the first time and the second time, wherein the third power may correspond to an amount of power consumed for the second pattern coil to perform short-range wireless communication for the second time.

The second pattern coil may receive identification information or state information about a wireless power receiver through short-range wireless communication.

The identification information may include standard information for the wireless power receiver to receive power.

The standard information may include standard information about at least one of WPC, PMA, A4WP, and AirFuel for wireless power transmission.

The state information may include position information about the wireless power receiver, wherein the circuit board integrated multi-mode antenna may further include a controller configured to align the first pattern coil with a receive antenna included in the wireless power receiver based on the position information.

The circuit board integrated multi-mode antenna may further include a controller configured to determine an alignment state of the first pattern coil and the receive antenna included in the wireless power receiver to change a position of the first pattern coil.

The wireless power signal and the short-range wireless communication signal may be transmitted at different operating frequencies.

In another embodiment, a method for controlling wireless power transmission of a wireless power transmitter, the method including transmitting a wireless power signal for wireless charging through a first pattern coil; and transmitting a short-range wireless communication signal through a second pattern coil, wherein the signals may be transmitted by performing time division on a transmission time for the first pattern coil and the second pattern coil.

The first pattern coil may transmit the wireless power signal for a first time in every first period, and the second pattern coil may transmit the short-range wireless communication signal for a second time after the first time in every second period.

The first pattern coil may transmit a wireless power signal at a first power for a first time and transmit a second power lower than the first power for a third time, wherein the third time may be between the first time and the second time, wherein the second power may correspond to an amount of power consumed for the second pattern coil to perform short-range wireless communication for the second time.

The first pattern coil may transmits a first power for a first time and transmit a third power higher than the first power for a third time, and the other one may perform NFC communication for the first time, wherein the third time may be between the first time and the second time, wherein the third power may correspond to an amount of power consumed for the second pattern coil to perform short-range wireless communication for the second time.

The second pattern coil may receive identification information or state information about a wireless power receiver through short-range wireless communication.

The identification information may include standard information for the wireless power receiver to receive power.

The standard information may include standard information about at least one of WPC, PMA, A4WP, and AirFuel for wireless power transmission.

The state information may include position information about the wireless power receiver, wherein the method may further include aligning the first pattern coil with a receive antenna included in the wireless power receiver based on the position information.

The method may further include determining an alignment state of the first pattern coil and the receive antenna included in the wireless power receiver to change a position of the first pattern coil.

The wireless power signal and the short-range wireless communication signal may be transmitted at different operating frequencies.

In another embodiment, there may be provided a computer-readable recording medium having recorded thereon a program for executing the method disclosed above.

The above-described aspects of the present disclosure are merely a part of preferred embodiments of the present disclosure. Those skilled in the art will derive and understand various embodiments reflecting the technical features of the present disclosure from the following detailed description of the present disclosure.

### [Advantageous Effects]

The method and device according to the embodiments have the following effects.

Embodiments may provide a multi-mode antenna integrated with a circuit board, and a device using the same.

Embodiments may provide a multi-mode antenna integrated with a circuit board capable of implementing integration and a compact design by using a part of a pattern coil printed on the circuit board for wireless charging as an antenna (for example, NFC antenna) for use other than wireless charging.

Embodiments may provide a multi-mode antenna integrated with a circuit board capable of implementing integration and a compact design by using a compact integrated antenna module that provides various functions.

Embodiments may provide a circuit board integrated antenna module having a wireless charging antenna, an NFC antenna, and a Bluetooth communication antenna.

Embodiments may provide an antenna module for wireless charging that is capable of reducing resistance and maximizing charging efficiency by connecting the ends of the pattern coils printed on both sides of a board with each other.

Embodiments may prevent interference that may occur between short-range wireless communication and power transmission by performing short-range wireless communication and power transmission in a time-division manner.

Embodiments may also transmit signals and information other than those of the standard for wireless power transmission defined by the standard group, through short-range wireless communication.

It will be appreciated by those skilled in the art that that the effects that can be achieved through the embodiments of the present disclosure are not limited to those described above and other advantages of the present disclosure will be more clearly understood from the following detailed description.

### [Description of Drawings]

The accompanying drawings, which are included to provide a further understanding of the disclosure and are incorporated in and constitute a part of this application, illustrate embodiments of the disclosure and, together with the description, serve to explain the principles of the disclosure. It is to be understood, however, that the technical features of the present disclosure are not limited to the specific drawings, and the features disclosed in the drawings may be combined to constitute a new embodiment.
FIG. 1 is a diagram illustrating a wireless charging system according to an embodiment.
FIG. 2 is a diagram illustrating a structure of a terminal circuit connected to or mounted on an integrated multi-mode antenna according to an embodiment.
FIG. 3 is a diagram illustrating the shape and terminal connection of a first pattern coil printed on a first surface of a circuit board of an integrated multi-mode antenna according to an embodiment.
FIG. 4 is a diagram illustrating a method of implementing an NFC antenna using the first pattern coil on the first surface of the circuit board of an integrated multi-mode antenna according to an embodiment.
FIG. 5 is a diagram illustrating the shape and terminal connection of a Bluetooth antenna printed on the first surface of the circuit board of an integrated multi-mode antenna according to an embodiment.
FIG. 6 is a diagram illustrating the shape and terminal connection of a second pattern coil printed on a second surface of the circuit board of an integrated multi-mode antenna according to an embodiment.
FIG. 7 is a diagram illustrating a method of implementing an NFC antenna using the second pattern coil on the second surface of the circuit board of an integrated multi-mode antenna according to an embodiment.
FIG. 8 is a diagram illustrating the shape and terminal connection of a Bluetooth antenna printed on the first surface of a circuit board of an integrated multi-mode antenna according to an embodiment.
FIG. 9 is a diagram illustrating a method of connecting an antenna to a terminal circuit of an integrated multi-mode antenna according to an embodiment.
FIG. 10 is a diagram illustrating a method of connecting an antenna to a terminal circuit of an integrated multi-mode antenna according to another embodiment.
FIG. 11 is a diagram illustrating a method of connecting an antenna to a terminal circuit of an integrated multi-mode antenna according to still another embodiment.
FIGs. 12 and 13 are diagrams illustrating a structure of a wireless power transmission device according to an embodiment.
FIG. 14 is a diagram illustrating a structure of a terminal circuit connected to or mounted on an integrated multi-mode antenna according to an embodiment.
FIG. 15 is a diagram illustrating the shape and terminal connection of a Bluetooth antenna printed on a first surface of a circuit board of an integrated multi-mode antenna according to an embodiment.
FIG. 16 is a diagram illustrating forms of a short-range wireless communication antenna and an antenna for wireless power transmission/reception according to an embodiment.
FIG. 17 is a flowchart illustrating time division in a wireless power transmission control method according to an embodiment.
FIG. 18 is a flowchart illustrating a method of transmitting continuous power in a wireless power transmission control method using time division according to an embodiment.
FIG. 19 is a flowchart illustrating a method of maintaining short-range wireless communication in a wireless power transmission control method according to an embodiment.
FIG. 20 is a flowchart illustrating a method of maintaining short-range wireless communication in a wireless power transmission control method according to another embodiment.

### [Best Mode]

A circuit board integrated multi-mode antenna according to an embodiment of the present disclosure may include a circuit board; a first pattern coil disposed on a first surface of the circuit board; a second pattern coil disposed on a second surface of the circuit board; and a terminal circuit mounted on one side of the circuit board and connected with both ends of the first pattern coil and both ends of the second pattern coil, wherein the both ends of the first pattern coil may be connected to the both ends of the second pattern coil through the terminal circuit.

### [Mode for Invention]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

While all elements constituting embodiments of the present disclosure are described as being connected into one body or operating in connection with each other, the disclosure is not limited to the described embodiments. That is, within the scope of the present disclosure, one or more of the elements may be selectively connected to operate. In addition, although all elements can be implemented as one independent hardware device, some or all of the elements may be selectively combined to implement a computer program having a program module for executing a part or all of the functions combined in one or more hardware devices. Code and code segments that constitute the computer program can be easily inferred by those skilled in the art. The computer program may be stored in a computer-readable storage medium, read and executed by a computer to implement an embodiment of the present disclosure. The storage medium of the computer program may include a magnetic recording medium, an optical recording medium, and a carrier wave medium.

In the description of the embodiments, it is to be understood that when an element is described as being "on" or "under" and "before" or "after" another element, it can be directly "on" or "under" and "before" or "after" another element or can be indirectly formed such that one or more other intervening elements are also present between the two elements.

The terms "include," "comprise" and "have" should be understood as not precluding the possibility of existence or addition of one or more other components unless otherwise stated. All terms, including technical and scientific terms, have the same meaning as commonly understood by one of ordinary skill in the art to which this disclosure pertains, unless otherwise defined. Commonly used terms, such as those defined in typical dictionaries, should be interpreted as being consistent with the contextual meaning of the relevant art, and are not to be construed in an ideal or overly formal sense unless expressly defined to the contrary.

In describing the components of the present disclosure, terms such as first, second, A, B, (a), and (b) may be used. These terms are used only for the purpose of distinguishing one constituent from another, and the terms do not limit the nature, order or sequence of the components. When one component is said to be "connected," "coupled" or "linked" to another, it should be understood that this means the one component may be directly connected or linked to another one or another component may be interposed between the components.

In the description of the embodiments, "wireless power transmitter," "wireless power transmission device," "transmission terminal," "transmitter," "transmission device," "transmission side," and the like will be used interchangeably to refer to a device for transmitting wireless power in a wireless power system, for simplicity.

In addition, "wireless power reception device," "wireless power receiver," "reception terminal," "reception side," "reception device," "receiver," and the like will be used interchangeably to refer to a device for receiving wireless power from a wireless power transmission device, for simplicity.

The wireless power transmitter according to the present disclosure may be configured as a pad type, a cradle type, an access point (AP) type, a small base station type, a stand type, a ceiling embedded type, a wall-mounted type, a vehicle embedded type, a vehicle-mounted type, or the like. One wireless power transmitter may transmit power to a plurality of wireless power receivers simultaneously or in a time division manner.

The wireless power transmitter may include at least one wireless power transmission means.

In addition, the wireless power transmitter according to the present disclosure may be networked and operatively connected with another wireless power transmitter. As an example, the wireless power transmitters may be operatively connected using a short-range wireless communication technology such as Bluetooth. As another example, the wireless power transmitters may be operatively connected using wireless communication technologies such as Wideband Code Division Multiple Access (WCDMA), Long Term Evolution (LTE)/LTE-Advanced, and Wi-Fi. A wireless power transmitter according to another embodiment may be operatively connected over a wired network.

For a wireless power transmission scheme employed applied to the present invention, various wireless power transmission standards which are based on the electromagnetic induction scheme for performing charging using the electromagnetic induction principle, by which a magnetic field is generated in a power transmission terminal coil and current is induced in a reception terminal coil by the magnetic field, may be used. Here, the standards for wireless power transmission in the electromagnetic induction scheme may include a wireless charging technique of the electromagnetic induction scheme defined by the Wireless Power Consortium (WPC) and/or the Power Matters Alliance (PMA) .

In another example, a wireless power transmission scheme may be the electromagnetic resonance scheme in which a magnetic field generated by a transmit coil of a wireless power transmitter is tuned to a specific resonance frequency to transmit power to a nearby wireless power receiver. For example, the electromagnetic resonance scheme may include a resonance-type wireless charging technique defined by the Alliance for Wireless Power (A4WP), which is a wireless charging technology standard organization.

In another example, as a wireless power transmission scheme, an RF wireless power transmission scheme in which low power energy is transmitted to a wireless power receiver located at a long distance therefrom over an RF signal may be used.

In another example of the present disclosure, the wireless power transmitter according to the present disclosure may be designed to support at least two wireless power transmission schemes among the electromagnetic induction scheme, the electromagnetic resonance scheme, and the RF wireless power transmission scheme.

In this case, the wireless power transmitter may transmit power in a wireless power transmission scheme supportable by a wireless power receiver connected to the wireless power transmitter. In an example, if the wireless power receiver supports multiple wireless power transmission schemes, the wireless power transmitter may select an optimum wireless power transmission scheme for the wireless power receiver and transmit power using the selected wireless power transmission scheme. In another example, the wireless power transmitter may adaptively determine a wireless power transmission scheme to be used for the wireless power receiver based on the type of the wireless power receiver, the power reception state, the power demanded, and the like.

A wireless power receiver according to an embodiment of the present disclosure may be provided with at least one wireless power reception means, and may simultaneously receive wireless power from two or more wireless power transmitters. Here, the wireless power reception means may include at least one of the electromagnetic induction scheme, the electromagnetic resonance scheme, and the RF wireless power transmission scheme.

In addition, a wireless power receiver according to another embodiment may select an optimum wireless power reception means to receive power, based on reception sensitivity or power transmission efficiency measured for each wireless power reception means.

The wireless power receiver according to the present disclosure may be embedded in small electronic devices such as a mobile phone, a smartphone, a laptop computer, a digital broadcast terminal, a PDA (Personal Digital Assistant), a PMP (Portable Multimedia Player), a navigation system, an MP3 player, an electric toothbrush, an electronic tag, a lighting device, a remote control, a fishing float, and the like. However, embodiments are not limited thereto, and the wireless power receiver may be applied to any devices which are provided with a wireless power reception means according to the present disclosure and is capable of wirelessly receiving power or charging a battery. A wireless power receiver according to another embodiment of the present disclosure may be mounted on home appliances including a TV, a refrigerator and a washing machine, a vehicle, an unmanned airplane, a drone, a robot, and the like.

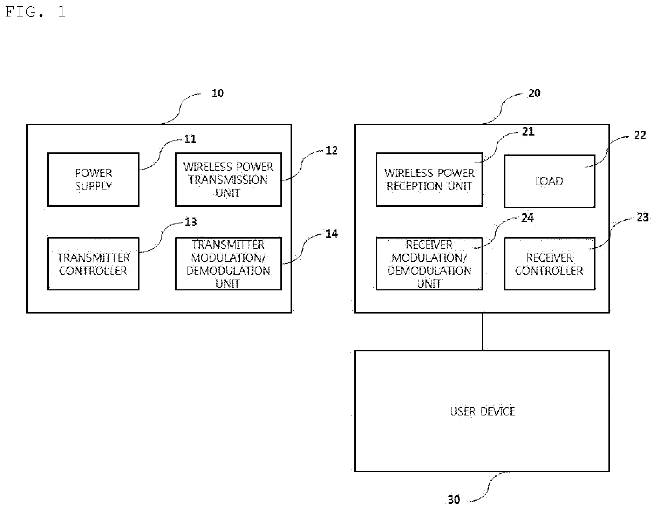

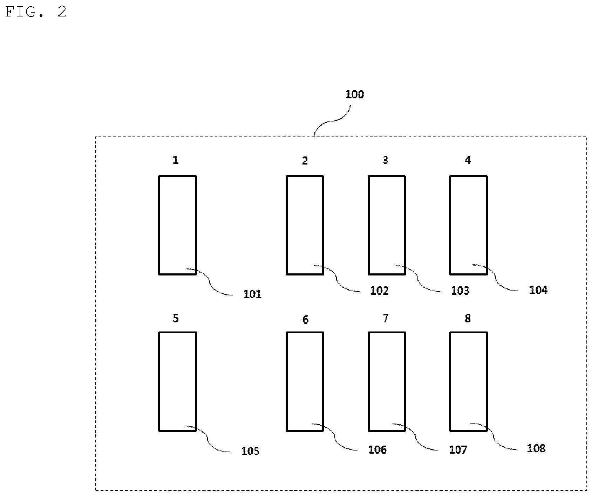

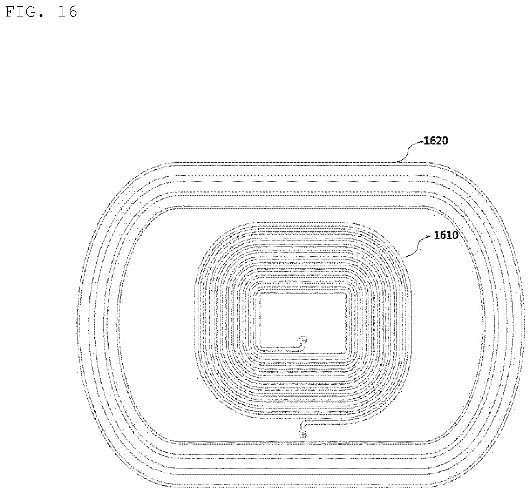

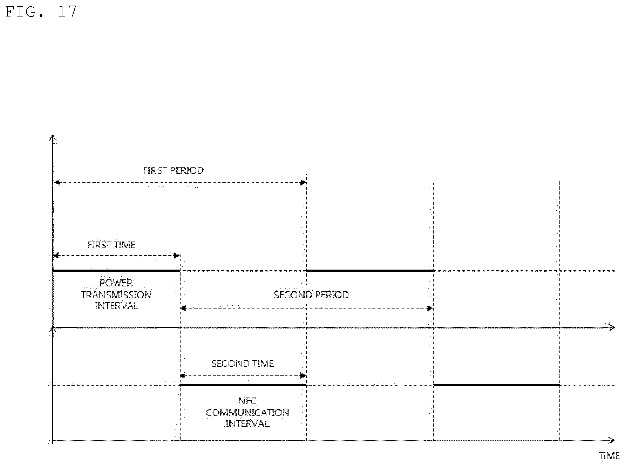

Hereinafter, a configuration of a wireless power system will be described as an embodiment with reference to FIG. 1, and a circuit board integrated multi-mode antenna and a device using the same according to the present disclosure will be described in detail with reference to FIGs. 2 to 15. A first pattern coil and a second pattern coil included in the wireless power transmitter will be described with reference to FIG 16. Then a specific method of transmitting, by a wireless power transmitter, a signal in a time division manner will be described based on the above configuration with reference to FIGS. 17 to 20.

FIG. 1 is a diagram illustrating a wireless charging system according to an embodiment.

Referring to FIG. 1, a wireless charging system may include a wireless power transmitter 10, a wireless power receiver 20, and a user device 30. The wireless power receiver 20 according to an embodiment may be integrated with the user device 30, but embodiments are not limited thereto. It should be noted that the wireless power receiver may be operatively connected with the user device via a separate wired/wireless communication means. As an example, the user device 30 may be a smartphone, and the wireless power receiver 20 may be mounted on one side of a battery cover of the smartphone.

In this case, the user device 30 may use information about the mounting position and type of a transmit coil on the wireless power transmitter 10 and/or information about the mounting position and type of a receive coil on the user device 30 to identify the alignment state of the transmit coil and the receive coil, and may output the information about the identified alignment state through a provided display screen.

In this regard, the wireless power transmitter 10 may use short-range wireless communication other than the in-band or out-of-band communication standard defined by a standard group to transmit the mounting position and type information about the transmit coil on the wireless power transmitter 10 to the user device 30 via the wireless power receiver 20.

As an example, the wireless power transmitter 10 may transmit information about a supportable standard as well as the mounting position and type information about the transmit coil, using short-range wireless communication (e.g., NFC communication) .

The user device 30 according to an embodiment may receive, from the wireless power receiver 20, state information about the power received from the wireless power transmitter 10, which may include, for example, intensity information about the rectifier output voltage and intensity information about a voltage input to a load, and may identify the alignment state between the transmit coil and the receive coil based on received power state information. The identified alignment state may be output through a screen provided in the user device 30.

The user device 30 according to an embodiment may also calculate the current charging efficiency based on the power reception state information received from the wireless power receiver 20. The charging efficiency may be calculated in real time and displayed on one side of the screen of the user device 30. The information about the charging efficiency calculated by the user device 30 may also be transmitted to the wireless power transmitter 10, and the wireless power receiver 20 may transmit information about the charging efficiency using short-range wireless communication.

Further, when the calculated current charging efficiency is less than a predetermined reference value, the user device 30 according to an embodiment may output a predetermined guide message through the screen to instruct movement of the device on the charging pad. In this case, when the user moves the device, the user device 30 may estimate the position of the transmit coil by measuring the change of the received power state according to the movement. At this time, the user device 30 may output a predetermined guide message or a direction indicator for guiding movement to the estimated position on the screen. In addition, the user device 30 may transmit, to the wireless power receiver 20, a signal indicating a change in the position of the transmit coil included in the wireless power transmitter 10. The signal indicating the change in the position is a signal not defined in the standard, and the wireless power receiver 20 may transmit the signal using short-range wireless communication.

Before this operation, the wireless power transmitter and receiver 10 and 20 may exchange position information about the transmit coil and receive coil included therein and exchange a signal for instructing change of positions of the transmit coil and receive coil (antennas or pattern coils) for alignment enhancing charging efficiency.

In addition, when the charging efficiency according to device movement reaches a predetermined reference value, which may be, but not limited to, 90%, for example, the user device 30 according to an embodiment message indicating success of device alignment on the screen.

In an example, the charging efficiency may be calculated as a percentage of the maximum rectifier output power with respect to the product (current power value) of the current rectifier output voltage of the wireless power receiver 20 and the current rectifier output current.

In another example, the charging efficiency may be calculated as a percentage of the rectifier output power of the wireless power receiver 20 with respect to the power applied to the transmit coil of the wireless power transmitter 10.

In another example, the charging efficiency may be calculated as a percentage of the actually received power with respect to the power for which the wireless power receiver 20 has made a request to the wireless power transmitter 10.

In another example, the charging efficiency may be calculated as a percentage of the voltage actually applied to the load with respect to the voltage required by the load.

Referring to FIG. 1, the wireless power transmitter 10 may include a power supply 11, a wireless power transmission unit 12, a transmitter controller 13, and a transmitter modulation/demodulation unit 14.

The wireless power transmission unit 12 may wirelessly transmit the power supplied from the power supply 11 through the transmit coil provided therein. Here, the transmit coil may include at least one of a transmission induction coil and a transmission resonance coil. In addition, the transmit coil may include an antenna capable of performing short-range wireless communication. Here, the transmission induction or resonance coil for transmitting a wireless power signal for wireless charging will be referred to as a "first antenna" (or first pattern coil), and a coil for transmitting a short-range communication signal will be referred to as a "second antenna" (second pattern coil). Hereinafter, the "first antenna" refers to the "first pattern coil", and the "second antenna" refers to the "second pattern coil".

In one embodiment, the first antenna and the second antenna may be integrally formed on one circuit board, and the transmitter controller 13 may control each of the first antenna and the second antenna to transmit a wireless power signal for wireless charging through the first antenna and transmit a short-range wireless communication signal through the second antenna. The transmitter controller 13 may control the respective signals to be transmitted by time-dividing the transmission times for the first antenna and the second antenna.

The wireless power transmission unit 12 may further include a predetermined frequency generator and/or a frequency changer configured to transmit power of a specific frequency component. The wireless power transmission unit 12 may further include a predetermined power control circuit configured to convert the intensity of AC power received from the power supply 11.

The transmitter modulation/demodulation unit 14 may include a demodulator and a modulator for wirelessly exchanging control information and/or state information with the wireless power receiver 20. The transmitter modulation/demodulation unit 14 may modulate and wirelessly transmit the information received from the transmitter controller 13, or may demodulate a received radio signal and transmit the demodulated signal to the transmitter controller 13.

The transmitter controller 13 may control the overall operation of the wireless power transmitter 10. In an example, the transmitter controller 13 may adaptively control the transmit power based on the state information about the wireless power receiver 10. In an example, the transmitter controller 13 may control the intensity of the transmit power based on the state information about the wireless power receiver 10 or may control power transmission to be interrupted when wireless charging is completed. The transmitter controller 13 may control the first and second antennas capable of short-range wireless communication, and may reduce interference between signals generated by the respective antennas by time-dividing power transmission and control signal transmission.

In one embodiment, the wireless power transmitter 10 may receive identification information or state information from the wireless power receiver 20. The identification information of the wireless power receiver 20 may be standard information related to the standards for wireless power transmission (e.g., WPC, PMA, A4WP, and AirFuel) supportable by the wireless power receiver. For example, the wireless power transmitter 10 may check if the wireless power transmission standard supportable by the wireless power receiver 20 is the WPC standard through short-range wireless communication with the wireless power receiver 20, prior to establishing a communication session for wireless power transmission.

The wireless power receiver 20 may include a wireless power reception unit 21, a load 22, a receiver controller 23, and a receiver modulation/demodulation unit 24.

The wireless power reception unit 21 may convert the AC power applied through the receive coil into DC power and transmit the converted power to the load 22. To this end, the wireless power reception unit 21 may include a receive coil configured to receive an electromagnetic field, a rectifier configured to convert AC power into DC power, and a DC-DC converter configured to convert the rectified power into a specific voltage required by the load 22

However, embodiments are not limited thereto.

The receiver controller 23 may sense the power reception state and/or the internal fault/alarm state of the wireless power receiver 20 and transmit information about the sensed power reception state and/or internal fault/alarm state to the user device 30 and the wireless power transmitter 10.

Here, the power reception state information may include, but is not limited to, rectifier output voltage intensity information and intensity information about a voltage applied to the load 22. In addition, the fault/alarm state information may include, but is not limited to, overvoltage/overcurrent sensing information, overheat information, timer expiration information, and charging completion information. In this regard, the wireless power receiver 20 may use short-range wireless communication for information not defined in the standard.

The receiver modulation/demodulation unit 24 may include a demodulator and a modulator for wirelessly exchanging control information and/or state information with the wireless power transmitter 10. The receiver modulation/demodulation unit 24 may modulate and wirelessly transmit the information received from the receiver controller 23, or may demodulate a received radio signal and transmit the demodulated signal to the receiver controller 23. An in-band communication scheme or an out-of-band communication scheme may be used for communication for exchange of information between the wireless power transmitter 10 and the wireless power receiver 20. Here, the in-band communication is a scheme of exchanging various kinds of control signals and information using the same frequency band as that used for wireless power transmission, and the out-of-band communication is a scheme of exchanging various kinds of control signals and information using a frequency band different from the frequency band used for wireless power transmission. For example, the out-of-band communication may be any one of bi-directional Bluetooth communication, Wi-Fi communication, RFID communication, UWB communication, and infrared communication, but is not limited thereto.

FIG. 2 is a diagram illustrating a structure of a terminal circuit connected to or mounted on an integrated multi-mode antenna according to an embodiment.

As shown in FIG. 2, the terminal circuit 100 may be mounted on one side of the circuit board and may include first to eighth terminals 101 to 108.

The terminal circuit 100 may be configured to allow connection of elements mounted to the circuit board on both sides of the circuit board. Here, the elements may include, but are not limited to, a pattern coil printed on a circuit board and a dipole antenna for Bluetooth communication. The elements may include a temperature sensor, a pressure sensor, and a Hall sensor.

While the terminal circuit is illustrated in the example of FIG. 2 as including eight terminals, this is merely one embodiment. It should be noted that more or fewer terminals may be provided depending on the configuration of the elements mounted on the circuit board.

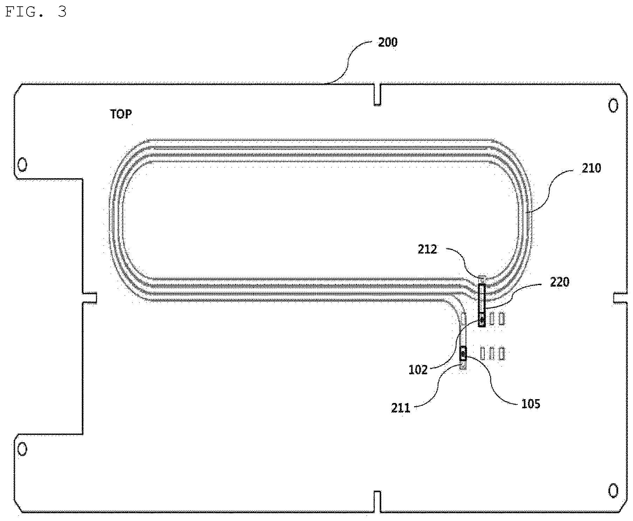

FIG. 3 is a diagram illustrating the shape and terminal connection of a first pattern coil printed on a first surface of a circuit board of an integrated multi-mode antenna according to an embodiment.

A first pattern coil 210 may be printed on the first surface, i.e., the top surface (TOP) of a circuit board 200, as shown in FIG. 3. Here, the first pattern coil 210 may be configured to form a plurality of turns by winding one feed line in a spiral form.

Referring to FIG. 3, the first pattern coil 210 is shown as having three turns, but this is merely one embodiment. The pattern coil may be configured to have two, three or more turns.

A first end 211 and a second end 212 of the first pattern coil 210 may be connected to the fifth terminal 105 and the second terminal 102, respectively. Here, the second end 212 may be connected to the second terminal 102 using a first feed line 220. The first feed line 220 may be a connecting wire disposed under or on the first pattern coil 210 and insulated from and connected to a part of the first pattern coil 210.

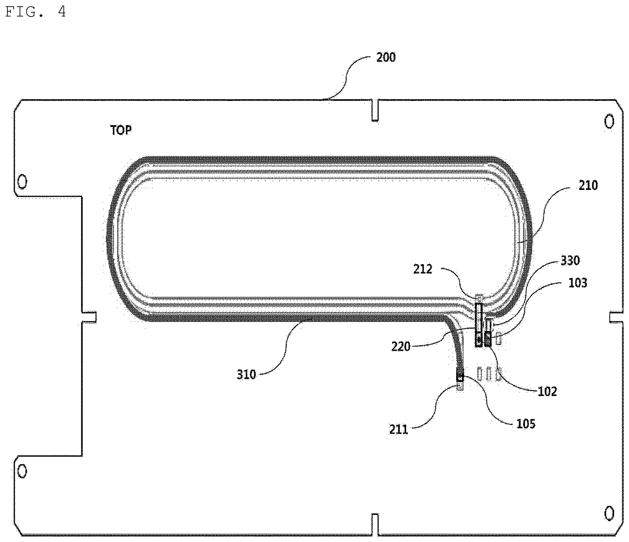

FIG. 4 illustrates a method of employing a part of a first pattern coil, which is arranged for a first purpose on the first surface of the circuit board of an integrated multi-mode antenna according to an embodiment, for a second purpose. For example, the figure is a diagram illustrating a method of implementing an NFC antenna using the first pattern coil on the first surface of the circuit board of an integrated multi-mode antenna according to an embodiment.

Referring to FIG. 4, a part of the turns of the first pattern coil 210 may be connected to another terminal through a portion thereof other than the first end 211 and the second end 212. For example, a second feed line 330 branching from one side of the outermost turn 310 of the first pattern coil 210 may be connected to the third terminal 102. Here, the second feed line 330 may branch at a position which is at the shortest distance from the third terminal 103. In addition, the second feed line 330 may branch from a portion as close to the second end 212 as possible. The second feed line 330 may be a connecting wire disposed under or on the first pattern coil 210 and insulated from and connected to a part of the first pattern coil 210.

As shown in FIG. 4, when the fifth terminal 105 and the second terminal 102 are used, they may be utilized for the first purpose (for example, wireless power transmission). When the fifth terminal 105 and third terminal 103 are used, they may be utilized for the second purpose (for example, for NFC communication). Here, the fifth terminal 105 is a terminal used for both wireless power transmission and NFC communication. As in one embodiment, by implementing a compact integrated antenna module that provides various functions by using one pattern coil for the first purpose and using a part of the pattern coil for the second purpose, an integrated antenna or a circuit board integrated multi-mode antenna capable of implementing integration and a compact design may be provided.

In addition, by implementing two purposes through one antenna, interference, which occurs when antennas for the two purposes are separately implemented, may not occur, and a separate compensation circuit, which was necessary to compensate for interference, may be omitted. Accordingly, an integrated antenna or a circuit board integrated multi-mode antenna capable of implementing a lightweight design, integration, and a compact design may be provided by using a compact integrated antenna module that provides various functions.

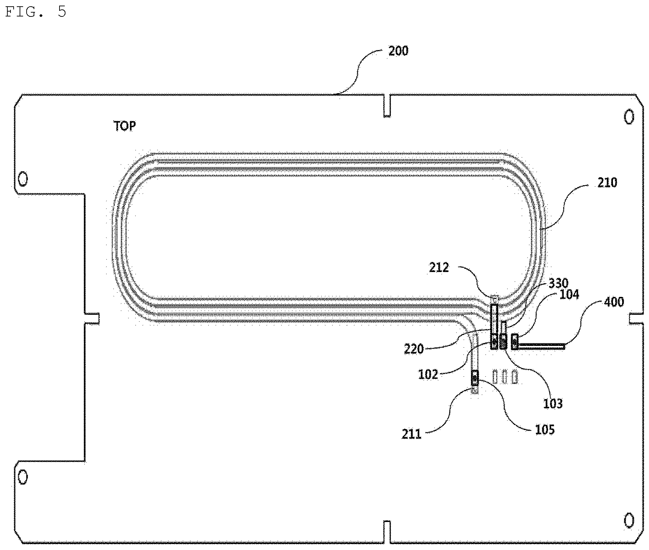

FIG. 5 is a diagram illustrating the shape and terminal connection of a Bluetooth antenna printed on the first surface of the circuit board of an integrated multi-mode antenna according to an embodiment.

Referring to FIG. 5, a dipole antenna 400 for Bluetooth communication may be connected to the fourth terminal 104 so as not to overlap the first pattern coil 210. As in one embodiment, a compact integrated antenna module that provides various functions may be provided by additionally forming an antenna for a third purpose in the same board. Thereby, an integrated antenna or a circuit board integrated multi-mode antenna capable of implementing integration and a compact design may be provided.

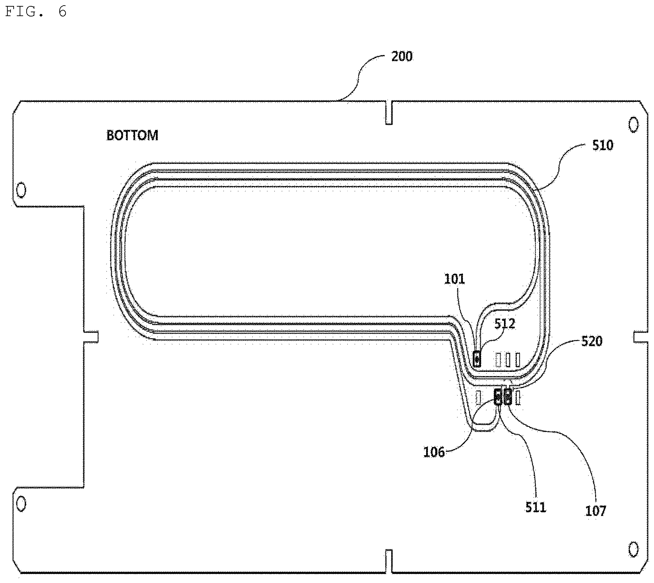

FIG. 6 is a diagram illustrating the shape and terminal connection of a second pattern coil printed on a second surface of the circuit board of an integrated multi-mode antenna according to an embodiment.

The second pattern coil 510 may be printed on the second surface of the circuit board 200, that is, the bottom surface (BOTTOM), as shown in FIG. 6. Here, the second pattern coil 510 may be configured to form a plurality of turns by winding one feed line in a spiral form.

Referring to FIG. 6, the second pattern coil 510 is shown as having three turns, but this is merely one embodiment. The pattern coil may be configured to have two, three or more turns. Here, the number of turns formed in the second pattern coil 510 may be the same as the number of turns formed in the first pattern coil 210 in FIG. 3. In addition, the printing positions and sizes of the first pattern coil 210 and the second pattern coil 510 may be determined such that the coils overlap each other on the circuit board as much as possible. FIG. 6 shows the shape viewed in the same direction as the direction of view of FIG. 2 in order to facilitate understanding of overlapping of the first pattern coil 210 and the second pattern coil 510. In other words, the figure shows the shape viewed in a direction from the first surface, that is, the top surface (TOP), to the second surface, that is, the bottom surface (BOTTOM) (as if the shape is viewed through the circuit board).

A first end 511 and a second end 512 of the second pattern coil 510 may be connected to the sixth terminal 106 and the first terminal 101, respectively.

A third feed line 520 branching from one side of the outermost turn of the second pattern coil 510 may be connected to the seventh terminal 107. Here, the third feed line 520 may branch at a position which is at the shortest distance from the seventh terminal 107. The third feed line 520 may branch at a position on the outermost turn of the second pattern coil 510 which is farthest from the first end 511 of the second pattern coil 510. This configuration may form the NFC antenna to be as long as possible, thereby increasing NFC sensitivity.

In particular, the integrated multi-mode antenna according to an embodiment may transmit a power signal using both the first pattern coil 210 printed on the first surface (TOP) and the second pattern coil 510 printed on the second surface (BOTTOM). In this case, the fifth terminal 105 connected to the first end 211 of the first pattern coil 210 and the sixth terminal 106 connected to the first end 511 of the second pattern coil 510 should be connected. In addition, the second terminal 102 connected to the second end 212 of the first pattern coil 210 and the first terminal 101 connected to the second end 512 of the second pattern coil 510 should be connected. By connecting the terminals to which the ends of the first pattern coil 210 and the second pattern coil 510 are connected (for example, by integrally forming the first pattern coil and the second pattern coil), the thickness of the pattern coil may be doubled, and the resistance may be reduced compared to a case where one pattern coil between the first pattern coil 210 and the second pattern coil 510 is used. Therefore, the integrated multi-mode antenna according to an embodiment may miniaturize the antenna module and maximize power transmission efficiency.

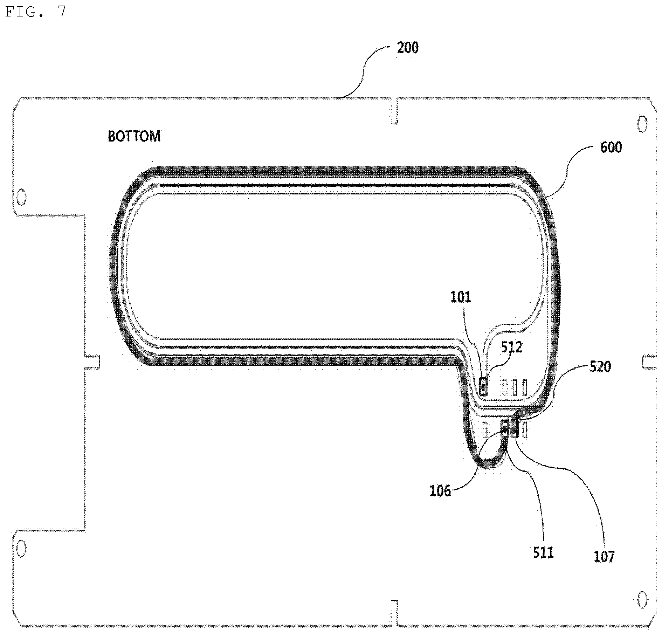

FIG. 7 illustrates a method of employing a part of a second pattern coil, which is arranged for the first purpose on the second surface of the circuit board of an integrated multi-mode antenna according to an embodiment, for the second purpose. For example, the figure is a diagram illustrating a method of implementing an NFC antenna using the second pattern coil on the second surface of the circuit board of an integrated multi-mode antenna according to an embodiment.

Referring to FIG. 7, the NFC antenna on the second surface may be implemented using the sixth terminal 106 connected to the first end 511 of the second pattern coil 510 and the seventh terminal 107 connected to the third feed line 520 branching from the outermost turn 600 of the second pattern coil 510. Here, the sixth terminal 106 is a terminal used for both wireless power transmission and NFC communication. As in one embodiment, by implementing a compact integrated antenna module that provides various functions using one pattern coil for the first purpose and using a part of the pattern coil for the second purpose, an integrated antenna or a circuit board integrated multi-mode antenna capable of implementing integration and a compact design may be provided.

When the NFC antenna is implemented using the outermost turn 310 of the first pattern coil 210 printed on the first surface (TOP) and the outermost turn 600 of the second pattern coil 510 printed on the second surface (BOTTOM) simultaneously, the third terminal 103 and the seventh terminal 107 may be connected. By connecting the third terminal 103 and the seventh terminal 107 (to, for example, integrally form the first pattern coil and the second pattern coil), the thickness of the NFC antenna may be doubled compared to the thickness in a case where the outermost turn on one surface is used. Therefore, the resistance of the NFC antenna may be lowered, thereby increasing NFC sensitivity.

FIG. 7 is a diagram illustrating the shape and terminal connection of a Bluetooth antenna printed on the second surface of a circuit board of an integrated multi-mode antenna according to an embodiment.

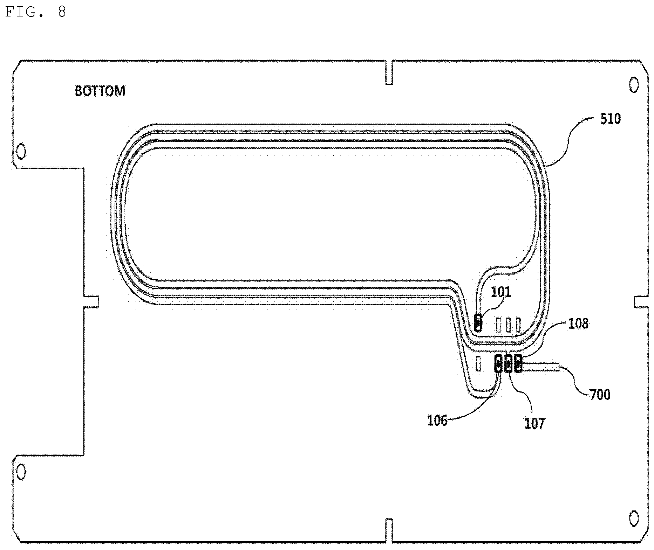

Referring to FIG. 8, a dipole antenna 700 for Bluetooth communication may be connected to the eighth terminal 108 so as not to overlap the second pattern coil 510. As in one embodiment, a compact integrated antenna module that provides various functions may be provided by additionally forming an antenna for a third purpose in the same board. Thereby, an integrated antenna or a circuit board integrated multi-mode antenna capable of implementing integration and a compact design may be provided.

When a Bluetooth antenna is implemented using both a dipole antenna 400 printed on the first surface (hereinafter referred to as a first dipole antenna for simplicity) and a dipole antenna 700 printed on the second surface (hereinafter referred to as a second dipole antenna for simplicity), the fourth terminal 104 to which the first dipole antenna 400 is connected and the eighth terminal 108 to which the second dipole antenna 700 is connected may be connected to each other. By connecting the fourth terminal 104 and the eighth terminal 108 (to, for example, integrally form the first dipole antenna and the second dipole antenna), the thickness of the Bluetooth antenna may be doubled, and the resistance may be reduced compared to a case where one dipole antenna is used. Therefore, the integrated multi-mode antenna according to the embodiment may enhance the Bluetooth communication sensitivity compared to the conventional technology using one dipole antenna.

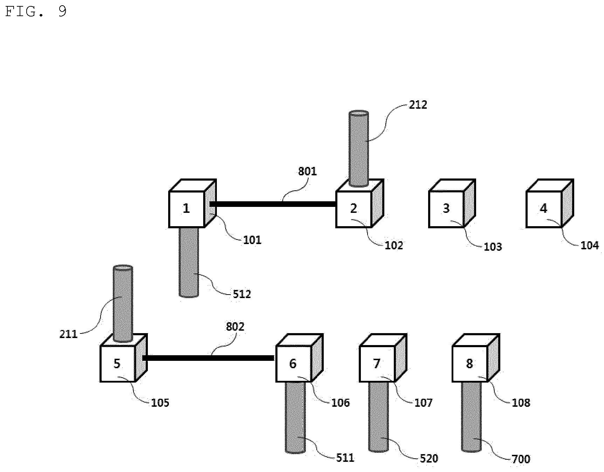

FIG. 9 is a diagram illustrating a method of connecting an antenna to a terminal circuit of an integrated multi-mode antenna according to an embodiment. According to an embodiment, the terminal circuit may include a first connecting wire 801 and a second connecting wire 802.

The integrated multi-mode antenna according to an embodiment may configure a coil for wireless power transmission using all pattern coils printed on both surfaces of a circuit board.

As described above with reference to FIGs. 2 to 7, the fifth terminal 105 to which the first end 211 of the first pattern coil 210 is connected and the sixth terminal 106 to which the first end 511 of the second pattern coil 510 is connected may be connected to each other. For example, the fifth terminal 105 and the sixth terminal 106 may be connected by the second connecting wire 802. The second terminal 102 to which the second end 212 of the first pattern coil 210 is connected and the first terminal 101 to which the second end 512 of the second pattern coil 510 is connected may be connected to each other. For example, the second terminal 102 and the first terminal 101 may be connected by the first connecting wire 801. By connecting the terminals to which the ends of the first pattern coil 210 and the second pattern coil 510 are connected to each other, the thickness of the pattern coil may be doubled, and the resistance may be reduced compared to a case where one pattern coil is used. Therefore, the integrated multi-mode antenna according to an embodiment may implement a compact antenna module and maximize power transmission efficiency.

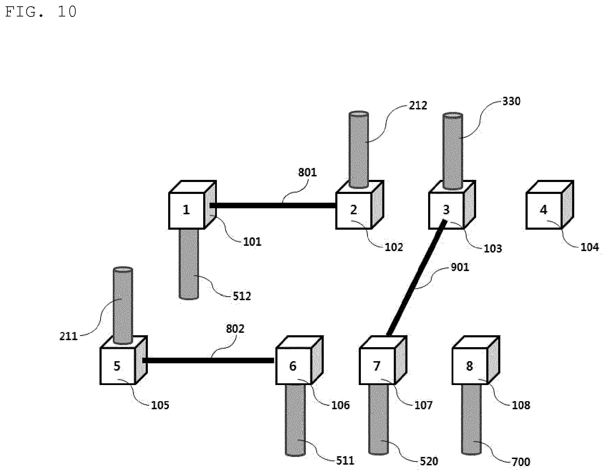

FIG. 10 is a diagram illustrating a method of connecting an antenna to a terminal circuit of an integrated multi-mode antenna according to another embodiment. According to an embodiment, the terminal circuit may include a third connecting wire 901.

One embodiment may implement an NFC antenna using the outermost turn 310 of the first pattern coil 210 printed on the first surface (TOP) and the outermost turn 600 of the second pattern coil 510 printed on the second surface (BOTTOM), simultaneously.

As shown in FIG. 10, the third terminal 103 and the seventh terminal 107 may be connected to each other. For example, the third terminal 103 and the seventh terminal 107 may be connected by the third connecting wire 901. By connecting the third terminal 103 and the seventh terminal 107 (to, for example, integrally form the outermost turn of the first pattern coil and the outermost turn of the second pattern coil), the thickness of the NFC antenna may be doubled compared to the thickness in a case where the outermost turn on one surface is used. Therefore, the resistance of the NFC antenna may be lowered, thereby increasing NFC sensitivity.

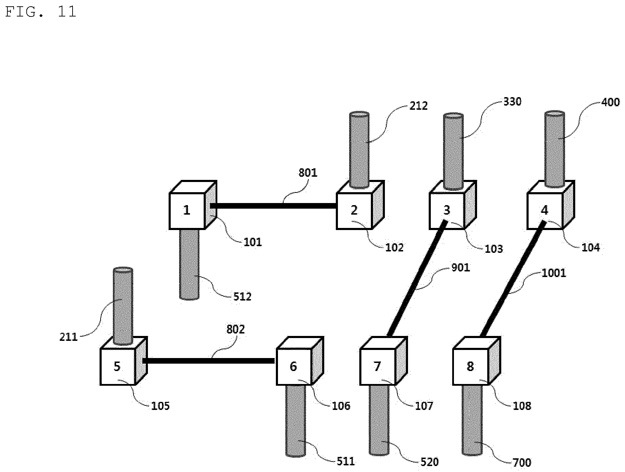

FIG. 11 is a diagram illustrating a method of connecting an antenna to a terminal circuit of an integrated multi-mode antenna according to still another embodiment. According to an embodiment, the terminal circuit may include a fourth connecting wire 1001.

The integrated multi-mode antenna according to an embodiment may implement a Bluetooth antenna using both a dipole antenna 400 printed on the first surface (hereinafter referred to as a first dipole antenna for simplicity) and a dipole antenna 700 printed on the second surface (hereinafter referred to as a second dipole antenna for simplicity).

As shown in FIG. 11, the fourth terminal 104 to which the first dipole antenna 400 is connected and the eighth terminal 108 to which the second dipole antenna 700 is connected may be connected to each other. For example, the fourth terminal 104 and the eighth terminal 108 may be connected by the fourth connecting wire 1001. By connecting the fourth terminal 104 and the eighth terminal 108 (to, for example, integrally form the first dipole antenna and the second dipole antenna), the thickness of the Bluetooth antenna may be doubled, and the resistance may be reduced compared to a case where one dipole antenna is used. Therefore, the integrated multi-mode antenna according to the embodiment may enhance Bluetooth communication sensitivity compared to the conventional technology using one dipole antenna.

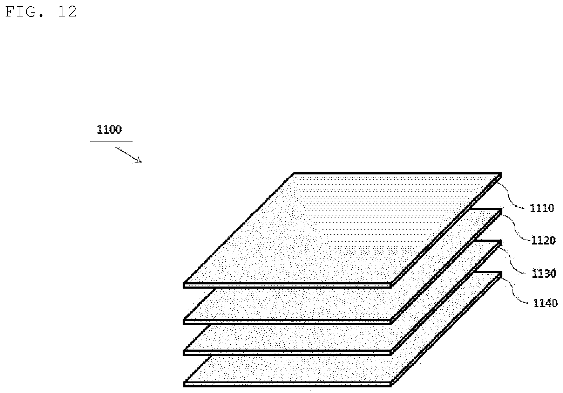

FIGs. 12 and 12 are diagrams illustrating a structure of a wireless power transmission device according to an embodiment.

Referring to FIG. 12, a wireless power transmission device 1100 may include a charging bed 1110, a circuit board integrated multi-mode antenna 1120, a shielding module 1130, and a control circuit board 1140.

Although not explicitly shown in FIG. 12, it should be noted that the circuit board integrated multi-mode antenna 1120 and the control circuit board 1140 may be electrically connected to each other through a predetermined binding terminal.

The charging bed 1110 is provided to position a device to be charged. The charging bed 1110 may have a planar shape, but this is merely an example and may be embodied in a hemispherical shape, a concave shape, a cup shape, or the like.

The circuit board integrated multi-mode antenna 1120 described above with reference to FIGs. 1 to 11 may be mounted on one side of a lower portion of the charging bed 1110.

The shielding module 1130 may block an electromagnetic signal induced or generated in the circuit board integrated multi-mode antenna 1120 from being transmitted to the control circuit board 1140.

As an example, the shielding module 1130 may employ a ferrite-based shielding material, but this is merely an example. Other shielding materials capable of shielding electromagnetic waves may be used. In addition, the types of the shielding module 1130 may include, but are not limited to, a sendust block type, an adhesive sheet type and a metal plate type.

A microprocessor for controlling the overall operation of the wireless power transmission device 1100 as well as various power conversion elements may be mounted on the control circuit board 1140.

Particularly, the positions of elements which are sensitive to electromagnetic signals and mounted on the control circuit board 1140 may not overlap the position where the Bluetooth antenna is printed on the circuit board. This arrangement may minimize occurrence of interference caused to the elements of the control circuit board 1140 due to radio signals transmitted/received through the Bluetooth antenna.

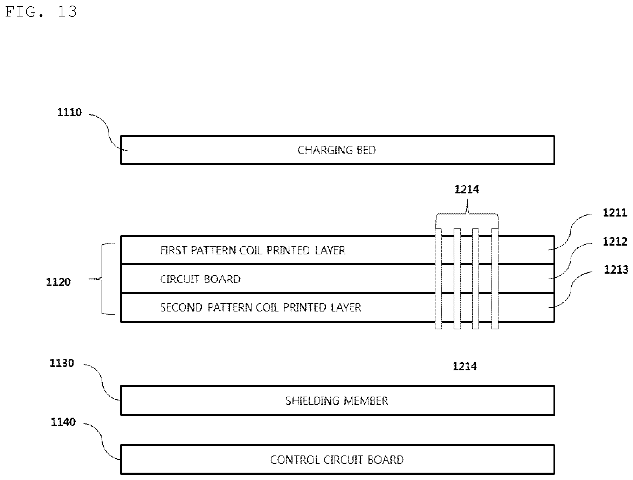

Hereinafter, a cross-sectional structure of a wireless power transmission device according to an embodiment will be described in detail with reference to FIG. 13.

The circuit board integrated multi-mode antenna 1120 according to an embodiment may include a first pattern coil printed layer 1211, a circuit board 1212, a second pattern coil printed layer 1213, and a terminal unit 1214. Here, the respective terminals constituting the terminal unit 1214 may be shared by the first pattern coil printed layer 1211 and the second pattern coil printed layer 1213 through the circuit board 1212. In addition, each terminal of the terminal unit 1214 may be partially exposed over the first and second pattern coil printed layers 1211 and 1213, and both terminals of a pattern coil for the first purpose (e.g., both terminals of the first and second coils), a terminal for the second purpose (e.g., an NFC antenna terminal), and a terminal for the third purpose (e.g., a Bluetooth antenna terminal) may be connected thereto. In addition, a specific terminal of the terminal unit 1214 may be connected to reduce the antenna resistance of at least one of a pattern coil for wireless power transmission, the NFC antenna, and the Bluetooth antenna, as described above with reference to FIGS. 1 to 11.

Although not explicitly shown in FIG. 13, it should be noted that the circuit board integrated multi-mode antenna 1120 and the control circuit board 1140 may be electrically connected to each other through a predetermined connection terminal. Here, arrangement and configuration of the connection terminal may depend on the design purpose intended by a person skilled in the art.

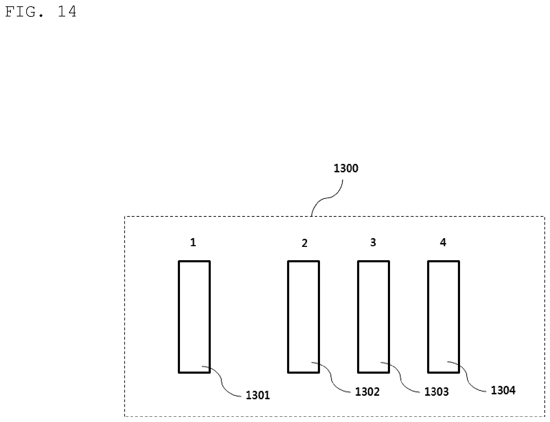

FIG. 14 is a diagram illustrating a structure of a terminal circuit connected to or mounted on an integrated multi-mode antenna according to an embodiment.

As shown in FIG. 14, a terminal circuit 1300 may be mounted on one side of the circuit board and may include first to fourth terminals 1301 to 1304.

The terminal circuit 1300 may be configured to allow connection of elements mounted on the circuit board on both sides of the circuit board. Here, the elements may include pattern coils printed on the circuit board and a dipole antenna for Bluetooth communication, but embodiments are not limited thereto. The elements may include a temperature sensor, a pressure sensor, and a Hall sensor.

While the terminal circuit is described in the example of FIG. 14 as having four terminals, this is merely an embodiment. It should be noted that more or fewer terminals may be provided depending on the configuration of elements mounted on the circuit board.

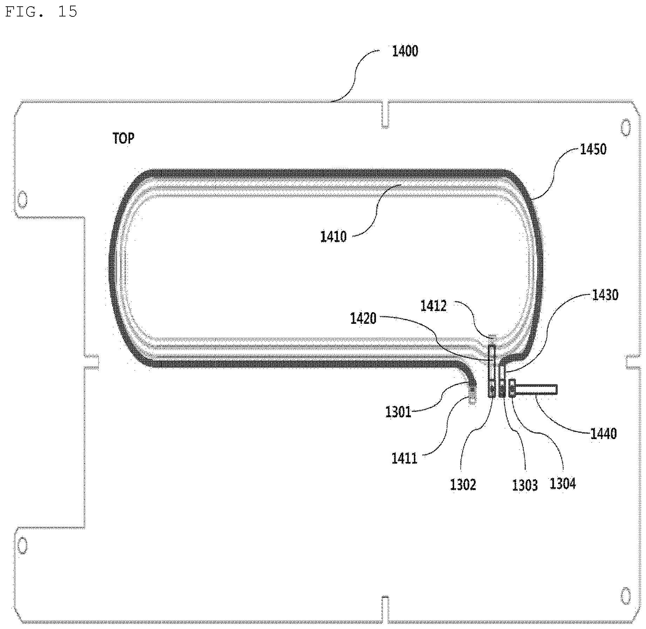

FIG. 15 is a diagram illustrating the shape and terminal connection of a first pattern coil printed on a first surface of a circuit board of an integrated multi-mode antenna according to an embodiment, a method of employing a part of the first pattern coil, which is arranged for a first purpose on the first surface of the circuit board of the integrated multi-mode antenna, for the second purpose, and the shape and terminal connection of a Bluetooth antenna printed on the first surface of the circuit board of an integrated multi-mode antenna according to an embodiment.

A first pattern coil 1410 may be printed on the first surface, i.e., the top surface (TOP) of a circuit board 1400, as shown in FIG. 3. Here, the first pattern coil 1410 may be configured to form a plurality of turns by winding one feed line in a spiral form.

Referring to FIG. 15, the first pattern coil 1410 is shown as having three turns, but this is merely one embodiment. The pattern coil may be configured to have two, three or more turns.

A first end 1411 and a second end 1412 of the first pattern coil 1410 may be connected to the first terminal 1301 and the second terminal 1302, respectively. Here, the second terminal 1412 may be connected to the second terminal 1302 using a first feed line 1420. The first feed line 1420 may be a connecting wire disposed under or on the first pattern coil 1410 and insulated from and connected to a part of the first pattern coil 1410.

Referring to FIG. 15, a part of the turns of the first pattern coil 1410 may be connected to another terminal through a portion thereof other than the first terminal 1411 and the second terminal 1412. For example, a second feed line 1430 branching from one side of the outermost turn 1450 of the first pattern coil 1410 may be connected to the third terminal 1303. Here, the second feed line 1430 may branch at a position which is at the shortest distance from the third terminal 1303. In addition, the second feed line 1430 may branch from one side of the outermost turn 1450 which is closest to the second end 1412. The second feed line 1430 may be a connecting wire disposed under or on the first pattern coil 1410 and insulated from and connected to a part of the first pattern coil 1410.

Referring to FIG. 15, when the first terminal 1301 and the second terminal 1302 are used, they may be utilized for a first purpose (for example, wireless power transmission). When the first terminal 1301 and the third terminal 1303 are used, they may be utilized for a second purpose (for example, NFC communication). Here, the first terminal 1301 is a terminal used for both wireless power transmission and NFC communication. As in one embodiment, by implementing a compact integrated antenna module that provides various functions by using one pattern coil for the first purpose and using a part of the pattern coil for the second purpose, an integrated antenna or a circuit board integrated multi-mode antenna capable of implementing integration and a compact design may be provided.

In addition, by implementing two purposes through one antenna, interference, which occurs when antennas for the two purposes are separately implemented, may not occur, and a separate compensation circuit, which was necessary to compensate for interference, may be omitted. Accordingly, an integrated antenna or a circuit board integrated multi-mode antenna capable of implementing a lightweight design, integration, and a compact design may be provided by using a compact integrated antenna module that provides various functions.

Referring to FIG. 15, a dipole antenna 140 for Bluetooth communication may be connected to the fourth terminal 1304 so as not to overlap the first pattern coil 1410. As in one embodiment, a compact integrated antenna module that provides various functions may be provided by additionally forming an antenna for a third purpose in the same board. Thereby, an integrated antenna or a circuit board integrated multi-mode antenna capable of implementing integration and a compact design may be provided.

FIG. 16 is a diagram illustrating forms of a short-range wireless communication antenna and an antenna for wireless power transmission/reception according to an embodiment.

Referring to FIG. 16, a wireless power transmitter may include an integrated coil including an antenna 1610 for transmitting power and a short-range wireless communication antenna 1620 provided separately at the outer periphery of the antenna. The wireless power transmitter may use the integrated coil to control pairing between the wireless power transmitter and a wireless power receiver for wireless power transmission.

The wireless communication in the present invention may be short-range wireless communication (e.g., Bluetooth communication, Near Field Communication (NFC) communication, Wireless Fidelity (WiFi) communication, etc.).

The wireless power transmitter may include a controller configured to control an antenna 1620 (the second antenna or pattern coil) for short-range wireless communication with an antenna 1620 (the first antenna or first pattern coil) for wireless power transmission. The controller may time-divide a wireless power signal for wireless power transmission and a short-range wireless communication signal and transmit the signal to the wireless power receiver.

FIG. 17 is a flowchart illustrating time division in a wireless power transmission control method according to an embodiment. In the wireless power transmission control method according to an embodiment, the horizontal axis in FIG. 17 may denote time, and the vertical axis may denote power, current, or voltage.

Referring to FIG. 17, time of the wireless power transmitter may be divided into a first time during which the wireless power transmitter transmits a wireless power signal for wireless power transmission and a second time during which a short-range wireless communication signal for controlling the wireless power receiver is transmitted.

The wireless power transmitter may adjust the lengths of the first time and the second time in consideration of power transmission efficiency. The amount of a short-range wireless communication signal used for the wireless power transmitter to control the wireless power receiver may be less than that of a wireless power signal for wireless power transmission. Thus, the first time may be longer than the second time.

The wireless power transmitter may also adjust the lengths of a first period and a second period as the periods of the first time and the second time, respectively. The second period may be shorter than the first period depending on the amount of the transmitted signal.

The wireless power transmitter may prevent interference from occurring between signals transmitted on each antenna through time division of the first time and the second time. A wireless power signal for wireless power transmission and a short-range wireless communication signal for controlling the wireless power receiver may have different operating frequencies, respectively. Even if they have different operating frequencies, signals radiated at the same time may be distorted due to interference. The present disclosure may prevent such frequency interference from occurring, thereby increasing signal reception efficiency.

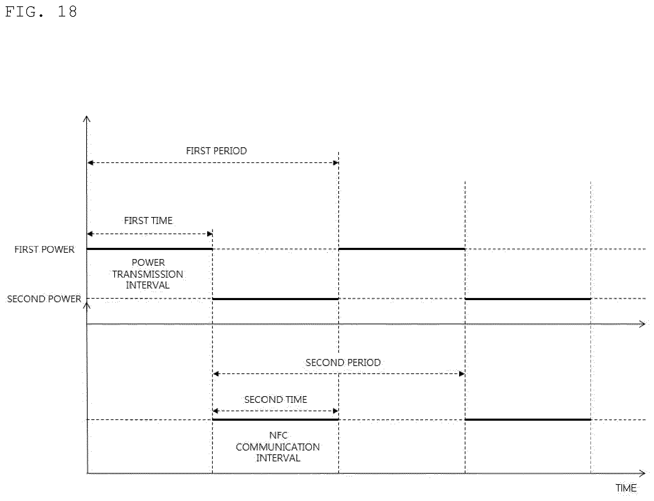

FIG. 18 is a flowchart illustrating a method of transmitting continuous power in a wireless power transmission control method using time division according to an embodiment.

Referring to FIG. 18, a wireless power transmitter may transmit a wireless power signal for wireless power transmission while transmitting a short-range wireless communication signal capable of controlling a wireless power receiver for a second time.

The wireless power transmitter may supply power to the wireless power receiver for the second time to prevent the wireless power receiver from being turned off due to power shortage for the second time, during which the wireless power signal is not transmitted.

In this operation, the wireless power transmitter may supply the wireless power receiver with a second power lower than a first power, which has a magnitude of a typical wireless power signal, for the second time that is pre-given through time division.

The wireless power receiver needs to maintain the active state of the wireless power receiver while transmitting and receiving short-range wireless communication signals. Accordingly, the second power may be power corresponding to the amount of power consumed in performing the short-range wireless communication for the second time, during which the short-range wireless communication signal is transmitted and received.

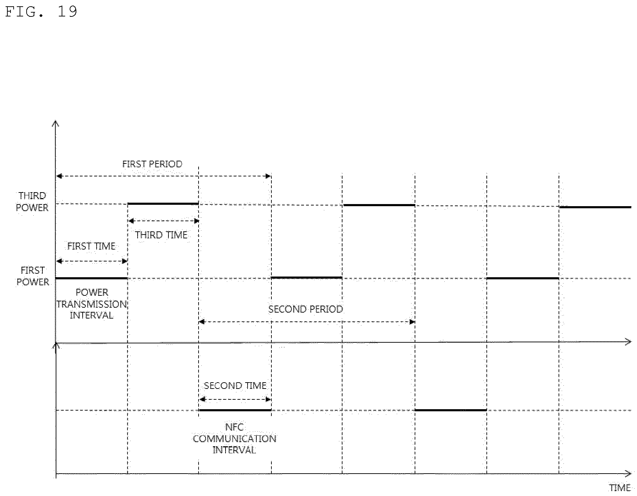

FIG. 19 is a flowchart illustrating a method of maintaining short-range wireless communication in a wireless power transmission control method according to an embodiment.

FIG. 19 is different from FIG. 1 in that the wireless power transmitter supplies a third power, which is higher than the first power, to the wireless power receiver for a third time.

By supplying the third power higher than the first power for the third time, which precedes the second time, during which the wireless power transmitter transmits the short-range wireless communication signal, the wireless power receiver may be prevented from being turned off for the second time, for which short-range wireless communication is performed.

In FIG. 18, interference may occur by transmitting a wireless power signal for the second time for transmitting a short-range wireless communication signal. On the other hand, in FIG. 19, by supplying the third power, which is a higher power, for the third time, the wireless power receiver may be prevented from being turned off for the second time, during which power transmission is interrupted.

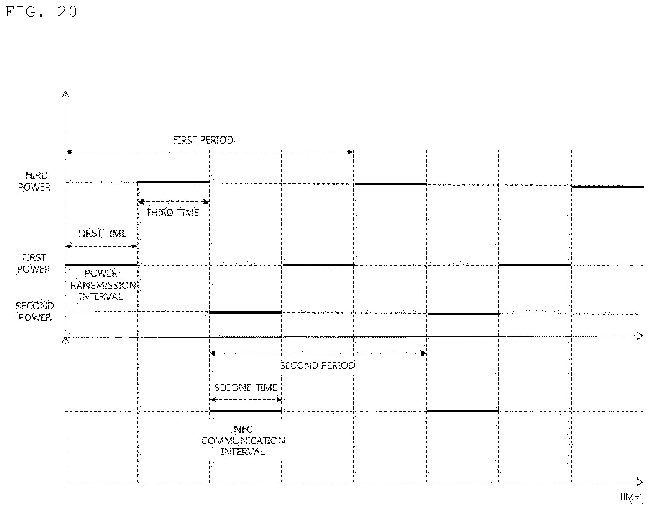

FIG. 20 is a flowchart illustrating a method of maintaining short-range wireless communication in a wireless power transmission control method according to another embodiment.

Referring to FIG. 20, the wireless power transmitter may supply a third power higher than a normal power level for a third time to prevent the wireless power receiver from being turned off during a second time for transmitting and receiving a short-range wireless communication signal, and may supply power to the wireless power receiver even for the second time so as to minimize the amount of interference.

By utilizing the wireless power transmission control method according to another embodiment, detection and positioning of the wireless power receiver may be performed more quickly and stably. In addition, the wireless power transmitter and the wireless power receiver may smoothly exchange state information without the power disconnected even during wireless power transmission.

The method according to embodiments of the present disclosure may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the method described above may be easily inferred by programmers in the art to which the embodiments pertain.

It is apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

### [Industrial Applicability]

A circuit board integrated multi-mode antenna according to embodiments may be used in a wireless power transmitter or a wireless power receiver that is configured to transmit or receive a power signal.

## Claims

1. A circuit board integrated multi-mode antenna comprising:
a circuit board;
a first pattern coil disposed on a first surface of the circuit board;
a second pattern coil disposed on a second surface of the circuit board; and
a terminal circuit mounted on one side of the circuit board and connected with both ends of the first pattern coil and both ends of the second pattern coil,
wherein the both ends of the first pattern coil are connected to the both ends of the second pattern coil through the terminal circuit.

2. The multi-mode antenna according to claim 1, wherein the terminal circuit comprises first to eighth terminals.

3. The multi-mode antenna according to claim 2, wherein the both ends of the first pattern coil are connected to the second terminal and the fifth terminal, and the both ends of the second pattern coil are connected to the first terminal and the sixth terminal.

4. The multi-mode antenna according to claim 3, wherein the second terminal and the first terminal are connected to each other, and the fifth terminal and the sixth terminal are connected to each other.

5. The multi-mode antenna according to claim 4, wherein a line branching from one side of an outermost turn of the second pattern coil is connected to the seventh terminal.

6. The multi-mode antenna according to claim 5, wherein a line branching from one side of an outermost turn of the first pattern coil is connected to the third terminal.

7. The multi-mode antenna according to claim 6, wherein a line branching from one side of the outermost turn of the second pattern coil is connected to the seventh terminal, and a line branching from one side of the outermost turn of the first pattern coil is connected to the third terminal,
wherein the seventh terminal and the third terminal are connected to each other.

8. The multi-mode antenna according to claim 3, further comprising:
a Bluetooth antenna disposed in a straight-line shape on one side of the first surface and connected to the fourth terminal.

9. The multi-mode antenna according to claim 2, further comprising:
a Bluetooth antenna disposed in a straight-line shape on one side of the second surface and connected to the eighth terminal.

10. The multi-mode antenna according to claim 2, further comprising:
a first dipole antenna and a second dipole antenna disposed in a straight-line shape on one side of each of the first surface and the second surface, respectively,
wherein the first dipole antenna is connected to the fourth terminal, and the second dipole antenna is connected to the eighth terminal,
wherein the fourth terminal and the eighth terminal are connected to each other to use the dipole antennas as a Bluetooth antenna.
